# EUROPEAN PATENT APPLICATION

(11) **EP 4 570 387 A1**
(43) Date of publication of application: **18.06.2025**
(21) Application number: 23461692.8
(22) Date of filing: 15.12.2023
(51) Int. Cl.: B05B 1/20, B05B 12/06, B05B 13/06, B05B 15/656, B05B 15/74, B08B 9/08, B64D 11/02, B05B 3/06

(54) **TANK RINSING ARRANGEMENT**

(71) Applicant: Goodrich Corporation, Charlotte, NC 28217 (US)
(72) Inventor: KROCZEK, Piotr Jacek, 51-317 Wroclaw (PL); TUREK, Lukasz, 51-317 Wroclaw (PL)
(74) Representative: Dehns

(57) **Abstract**

A rinse arrangement for cleaning an interior volume of a tank, the arrangement comprising: a rinse nozzle (200) having a rotary head (216) via which rinse fluid is sprayed as the head rotates about a rinse nozzle axis A; a telescopic mechanism (218, 220) attached to the rotary head movable between a retracted position and an extended position along the rinse nozzle axis A; a biasing means (222) to bias the telescopic mechanism to the retracted position; means (300) for applying rinse fluid to the rinse nozzle alternately at a low pressure and a high pressure, the low pressure the fluid to spray from the rotary head and causing rotation of the rotary head around the axis due to the force of the spraying of the fluid, but the low pressure being insufficient to overcome the bias, and the high pressure overcoming the bias and causing the telescopic mechanism to move to the extended position and to cause rotation of the rotary head around the axis due to the force of the spraying of the fluid.

## Description

### TECHNICAL FIELD

The present disclosure relates to ways of cleaning the interior of a tank such as, but not exclusively, a waste tank e.g. in an aircraft.

### BACKGROUND

Tanks or reservoirs containing matter such as waste from a sanitation system, or other matter, which may be contaminated or hazardous or generally undesirable if left on the inner surfaces of the tank for a period of time often include a device that extends into and sprays water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fittings that may be provided on the tank walls, extending to the tank interior, there may be some areas that are effectively obstructed or hidden by these components and are not reached by the spray from the spinning head. Furthermore, particularly when the tanks are large. The fluid may not reach the bottom of the tank, or may not reach the bottom with sufficient force to provide effective cleaning. This can result in waste material or the like remaining in those areas where the pressurised fluid does not reach, and clogging or building up. The tank cannot, therefore, be fully purged of all of the waste, which can cause contamination of the tank. There is, therefore, a need for a cleaning arrangement that can ensure that a greater area of the tank interior is contacted by the cleaning fluid.

### SUMMARY

According to the present disclosure, there is provided a rinse arrangement for cleaning an interior volume of a tank, the arrangement comprising: a rinse nozzle having a rotary head via which rinse fluid is sprayed as the head rotates about a rinse nozzle axis A; a telescopic mechanism attached to the rotary head movable between a retracted position and an extended position along the rinse nozzle axis A; a biasing means to bias the telescopic mechanism to the retracted position; means for applying rinse fluid to the rinse nozzle alternately at a low pressure and a high pressure, the low pressure the fluid to spray from the rotary head and causing rotation of the rotary head around the axis due to the force of the spraying of the fluid, but the low pressure being insufficient to overcome the bias, and the high pressure overcoming the bias and causing the telescopic mechanism to move to the extended position and to cause rotation of the rotary head around the axis due to the force of the spraying of the fluid.

A tank including such a rinse arrangement, and a cleaning method are also provided.

### BRIEF DESCRIPTION

Examples of the rinse device according to this disclosure will be described with reference to the drawings. It should be noted that these are merely examples and variations are possible within the scope of the claims.
Figure 1 shows an example of a known tank and rinse arrangement for the purposes of explanation.
Figure 2 shows a sectional view of a waste tank with a known rinse arrangement such as shown in Fig. 1.
Figure 3 shows an example of a tank having a rinse arrangement according to this disclosure.
Figure 4A shows the rinse arrangement of the example of Fig. 3 in more detail.
Figure 4B shows a part of the arrangement of Figure 4A, in more detail.
Figure 5A shows a tank with a rinse arrangement according to the disclosure in a first position.
Figure 5B shows the rinse arrangement in the position of the example of Fig. 5A, in more detail.
Figure 6A shows a tank with a rinse arrangement according to the disclosure in a second position.
Figure 6B shows the rinse arrangement in the position of the example of Fig. 6A, in more detail.
Figure 7 is a time graph for explaining the operation of a rinse arrangement according to the disclosure.

### DETAILED DESCRIPTION

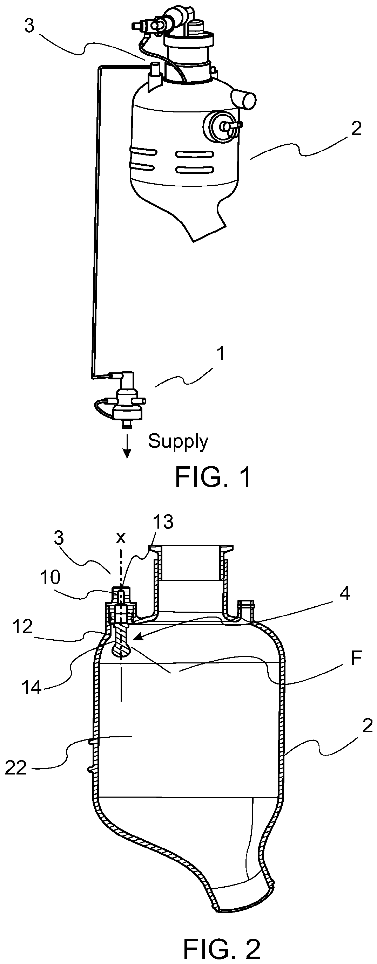

A typical rinse device is shown in Figs. 1 and 2. A rinse nozzle 3 is shown mounted in the wall 12 of a tank 2 or vat or other reservoir. The rinse nozzle 3 is connected, in use, to a rinse port 1 from which rinse fluid is provided to the rinse nozzle from a rinse fluid supply. Figure 2 shows, in cross-section, the rinse nozzle 3 mounted in the wall 12 of the tank 2, at the top of the tank. Apertures or jets 4 are formed in the nozzle 3 such that as rinse fluid is provided to the nozzle 3 it is sprayed out through the jets 4 around the interior 22 of the tank to clean the tank. A typical nozzle 3 comprises a housing 10, one end of which is provided with a fitting 13 arranged to be attached to a pipe or the like via which pressurised water or cleaning solution is provided. At the other end of the housing through which the pressurised fluid flows, which extends into the tank, is mounted a rinse head 14 mounted to rotate relative to the housing 10. The rinse head is arranged to rotate about an axis of rotation X which is the axis through the housing from the one end to the other end.

The rinse head 14 is provided with a number of holes or jets 4 via which the pressurised fluid F forced through the housing is ejected into the tank. The jets can be positioned offset from the axis of rotation and at angles such that the ejection of the pressurised fluid F provides a force that causes the rinse head 14 to rotate relative to the housing about the axis X.

The pressurisation of the fluid and the rotation of the rinse head provides a good range of coverage of the interior of the tank with cleaning fluid. In some cases, however, areas may exist, due to the presence of other components on the inside of the tank, that fluid from the rinse head cannot reach. Alternatively, because the rinse nozzle is typically small and mounted into the top of the tank, the pressurized fluid F may not adequately reach the bottom or other locations in the interior of the tank, or at least not with sufficient force to adequately clean the tank. Furthermore, as can be seen in Fig. 2, the jets do not clean the tank in a symmetrical manner.

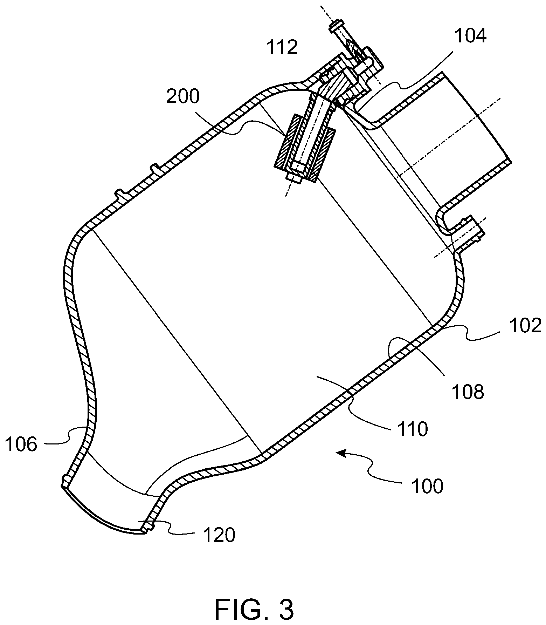

The rinse arrangement according to this disclosure is designed to address these problems as will be described with reference to Figs. 3 to 7.

Specifically, the arrangement of this disclosure includes a telescopic rinse nozzle that moves between a first, retracted position, at which the rinse head rotates, and a second, extended position responsive to the level of fluid pressure applied to the rinse nozzle, at which the rinse head rotates. The rinse nozzle is caused to cycle between the retracted position and the extended position by means of a pulse valve attached to the rinse nozzle that alternately applies low pressure and high pressure pulses to the rinse nozzle. The arrangement, as will be further described below, can be installed in existing tanks without requiring modification to the tank structure.

In more detail, as seen in Fig. 3, the rinse arrangement is provided to be mounted to a tank 100 or other container to be cleaned. In the example shown, the tank 100 has an outer wall 102, a top 104 and a bottom 106, and an inner wall 108 which defines an interior volume 110 of the tank to be cleaned by the rinse arrangement. An inlet port 112 for the rinse fluid is provided in the tank at an upper portion T of the tank (either through the top or through an upper region of the outer wall) and opens into the volume 110 to be cleaned. A drain 120 is provided at the lower end of the tank through which the rinse fluid and removed waste and contaminants can exit the tank. The rinse arrangement of this disclosure is configured to be mounted to the tank at the inlet port 112.

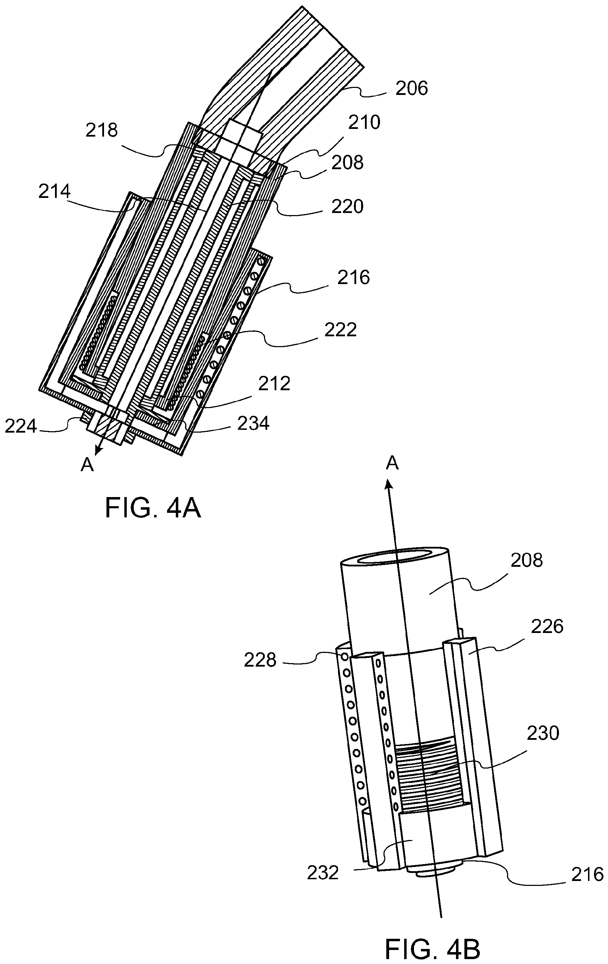

As best seen in Fig. 4, the rinse arrangement includes a rinse nozzle 200 having a first end 202 which, when the rinse arrangement is installed at the inlet port, is located in or extends outwards from the inlet port, and a second end 204 which, when the rinse arrangement is installed in the inlet port, extends into the volume of the tank to be cleaned. The first end 202 is configured to be connected to a supply of rinse fluid (e.g. water or detergent or other cleaning or rinsing fluid). The connection may be by means of a connector part or a connector tube 206. The rinse arrangement includes a rinse nozzle housing 208. This has a first end 210 which may, itself, be the first end of the rinse arrangement or may be connected to the first end of the rinse arrangement e.g. by a connector tune 206. The rinse nozzle housing also has a second end 212. A fluid flow channel 214 is defined within the housing 208 from the first end to the second end, defining a flow axis A.

A rotary nozzle head 216 is mounted around the housing 208 such that it can rotate relative to the housing about the flow axis A. The mechanism for rotation will be explained further below but, in short, in a way similar to the know rotary nozzle head described above, the fluid flows into the fluid flow channel 214 and exits at the second end 212 of the housing 208. The fluid is then directed into arms of the rotary head. These arms have apertures or openings through which the fluid sprays out. The arms are arranged such that the force of the spraying fluid in a circumferential direction relative to the axis A causes the rotary head to rotate about the axis A.

In addition to the rotary nozzle head 216 being rotatable relative to the housing 208, it is also arranged to be linearly moveable relative to the housing (in the axial A direction). The rotary nozzle head is mounted to the housing 208 by means of a telescopic mechanism comprising a first stage arm 218 and a second stage arm 220. The arms 218, 220 are mounted within the housing 208 with, in the example shown, the first stage arm 218 radially outwards of the second stage arm 220, and are arranged to move axially relative to the housing in response to an applied pressure.. The second stage arm is connected to the rotary head at the second end of the housing. The connection may be made in any suitable way to secure the second stage arm and the rotary head together to move linearly with each other. In the example, the connection is by means of a clip 224, but this is clearly only an example. The second stage arm 220 is held in a retracted position within the first stage arm 218 and the arms are held in a retracted position within the housing, by means of a spring 222.

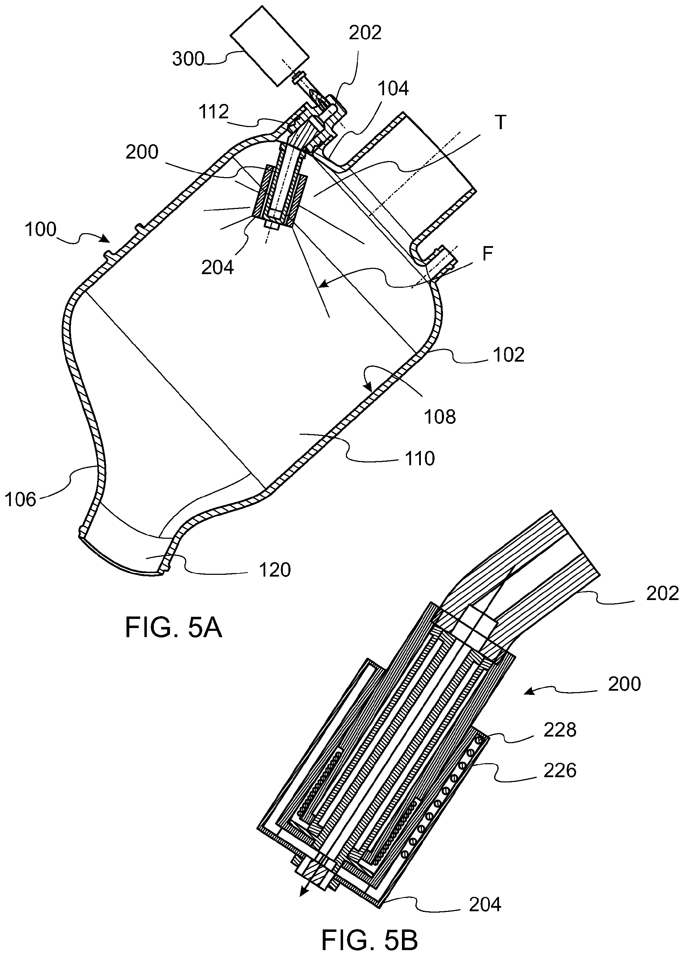

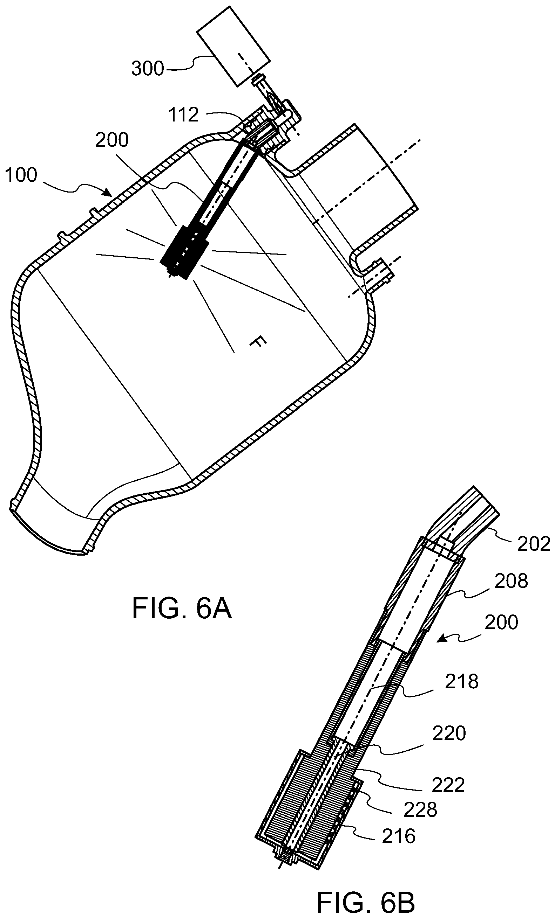

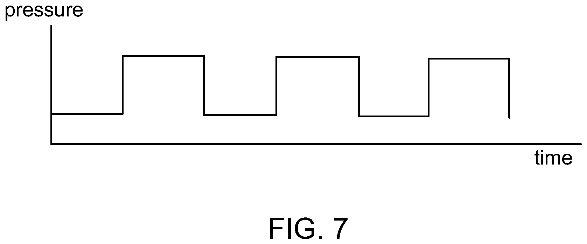

The rinse arrangement also includes a means for applying pulsed pressure to the first end 202. This may be a connector configured to be attached to a pulse valve 300 which may be located external of the tank as shown in Figs. 5A and 6A. The pulse valve provides rinse fluid (from a supply, which can be conventional) to the rinse nozzle at varying pressure. Alternating low and high pressure is applied to the rinse arrangement during operation, causing the rinse nozzle to cycle between the retracted position and the extended position. In this way, the rotary head alternately operates at two different axial positions, thus ensuring a fuller coverage of the interior of the tank with the rinse fluid from the apertures of the rinse head. Fig. 7 shows an example of the cycle of pressure over time. Low pressure is applied to the nozzle for a first interval, during which the rotary head is in the retracted position (i.e. closer to the top of the tank), and then high pressure is applied for a second interval, which causes the rinse nozzle to lengthen to the extended position (i.e. further into the interior of the tank), while the rotary head rotates and spray rinse fluid at both positions. The time intervals can vary according to need and application.

Figures 5A and 5B show the arrangement in the first, low pressure, retracted position. Here, the pressure of the fluid in the flow channel, acting on the second end and so pushing against the second end of the telescopic mechanism, is less than the force of the spring 222 acting in the opposite direction to bias the arms into the retracted position. The arms therefore remain retracted or nested in the housing and the rotary head 216 remains located around the housing 208. The fluid flows from the channel into the rotary head arms 226 and out through the apertures 228, as described above, the force of the sprayed fluid causing the rotary head to rotate about axis X. Fluid F is sprayed out predominantly around the top of the tank where the nozzle is positioned, as seen in Fig. 5A.

The rotary operation of the rotary head 216 can be described further with reference to Fig. 4B which shows one example of a rotary head. The rotary head 216 is mounted about the housing 208 to be able to rotate relative to the housing around the housing axis X. In the example shown, the rotary head is mounted to the housing by means of threads 230 but alternative rotary attachments may be possible. The rotary head comprises a rotary head base 232 that fits round the housing. Rotary head arms 226 extend from the base 232 in the axial direction A along the outer side of the housing. In this example, there are four arms 226, but different numbers of arms are possible. The arms each have a number of spray apertures 228 through which the rinse fluid sprays out into the tank. As seen most clearly in Fig. 4A, a groove 234 provides fluid communication from the fluid channel to the interior of the arms 216. Fluid from the channel, therefore, enters the arms via the groove and sprays out, under pressure, via the apertures 228. The spraying fluid has a jet force, dependent on the number and size of the nozzles, the angle of the nozzles and the pressure of the fluid that creates a reactive force to rotate the rotary head (in much the same way as, for example, a lawn sprinkler).

In the interval when the high pressure is applied to the arrangement, the high pressure fluid in the nozzle acts in the axial direction on the second end of the arrangement where the second arm is connected to the rotary head. In this phase, the fluid pressure acting on the second end is greater than the opposite force of the spring and so moves the rotary head and the connected second arm axially out of the housing. As the second stage arm reaches the end of its extension, due to the telescopic arrangement, its first end engages with the first stage arm and this also telescopically extends from the housing as seen in Figs. 6A and 6B. Whilst the examples only show two stage arms, the telescopic mechanism can, of course, include more telescope stage arms to allow further extension and more positions. During the extension and at the extended position, the rotary head continues to rotate about the axis A, in the same way as described above, thus spraying fluid F at different locations inside the tank. The entire cleaning or rinsing process may include several cycles of low and high pressure intervals to ensure thorough cleaning of the tank.

The simple, mechanical construction of the rinsing arrangement can be fitted to existing tanks without modification of the tank and is able to reach more of the tank interior in a simple, efficient manner with minimum energy consumption and CO₂ emissions.

## Claims

1. A rinse arrangement for cleaning an interior volume of a tank, the arrangement comprising:
a rinse nozzle (200) having a rotary head (216) via which rinse fluid is sprayed as the head rotates about a rinse nozzle axis A;
a telescopic mechanism (218, 220) attached to the rotary head movable between a retracted position and an extended position along the rinse nozzle axis A;
a biasing means (222) to bias the telescopic mechanism to the retracted position;
means (300) for applying rinse fluid to the rinse nozzle alternately at a low pressure and a high pressure, the low pressure the fluid to spray from the rotary head and causing rotation of the rotary head around the axis due to the force of the spraying of the fluid, but the low pressure being insufficient to overcome the bias, and the high pressure overcoming the bias and causing the telescopic mechanism to move to the extended position and to cause rotation of the rotary head around the axis due to the force of the spraying of the fluid.

2. The rinse arrangement of claim 1, wherein the rinse nozzle comprises a housing (208) defining a fluid flow channel from a first end to a second end along the axis A, and wherein the telescopic mechanism comprises two or more telescopic arms (218, 220) in a telescopic configuration within the housing.

3. The rinse arrangement of claim 1 or 2, wherein the biasing means is a spring (222).

4. The rinse arrangement of claim 1, wherein the rotary head comprises a rotary head base (232) and a plurality of rotary head arms (226) extending substantially axially from the base, each rotary head arm comprising a fluid channel and one or more apertures (228) for the spray of fluid from the fluid channel.

5. The rinse arrangement of any preceding claim, the rinse nozzle defining a fluid flow channel to the rotary head.

6. The rinse arrangement of claim 2 or any claim dependent thereon, comprising a first telescopic arm (218) and a second telescopic arm (220), the second telescopic arm located radially inwards of the first telescopic arm and being attached at a second end to the rotary head to cause linear movement of the rotary head along axis A as the second telescopic arm extends relative to the housing.

7. The rinse arrangement of claim 6, comprising a clip (224) attaching the second telescopic arm to the rotary head.

8. The rinse arrangement of claim 4 or any claim dependent thereon, the rotary head comprising four rotary head arms.

9. The rinse arrangement of claim 4 or any claim dependent thereon, each rotary head harm having a plurality of apertures.

10. The rinse arrangement of any preceding claim, wherein the means for applying rinse fluid comprises a pulse valve (300).

11. The rinse arrangement of claim 10, wherein the pulse valve is connected to the rinse nozzle by a connector tube (206).

12. A tank defining an interior volume to be cleaned, the tank comprising a rinse fluid inlet port (112) between an exterior of the tank and the interior (110), the tank further comprising a rinse arrangement as claimed in any preceding claim located in the inlet port such that the rotary head extends into the interior of the tank.

13. The tank of claim 12 further comprising a drain port (120) for draining the fluid from the tank.

14. A method of cleaning an interior of a tank comprising:
mounting a rinse arrangement as claimed in any of claims 1 to 11 to an inlet port of the tank; applying the rinse fluid alternately at low pressure and high pressure.

15. The method of claim 14, comprising applying rinse fluid alternately at low pressure and high pressure for multiple cycle.
